(19) **Europäisches Patentamt / European Patent Office / Office européen des brevets**

(11) **EP 3 659 734 B1**

(12) **FASCICULE DE BREVET EUROPEEN**

(45) Date de publication et mention de la délivrance du brevet:
**20.04.2022 Bulletin 2022/16**

(21) Numéro de dépôt: **19212048.3**

(22) Date de dépôt: **28.11.2019**

(51) Classification Internationale des Brevets (IPC):
**B23D 65/00** (2006.01) **B28D 5/00** (2006.01)
**B28D 5/04** (2006.01) **B28D 1/10** (2006.01)
**B28D 7/00** (2006.01)

(52) Classification Coopérative des Brevets (CPC):
**B28D 5/0064; B23D 65/00; B28D 5/045;** B28D 1/10; B28D 7/005

(54) **PROCÉDÉ DE DÉTERMINATION D'AU MOINS UN PARAMÈTRE D'USURE D'UN FIL DE COUPE ET SON DISPOSITIF DE MISE EN OEUVRE**

VERFAHREN ZUR BESTIMMUNG VON MINDESTENS EINEM VERSCHLEISSPARAMETER EINES SCHNEIDDRAHTS, UND ENTSPRECHENDE VORRICHTUNG

METHOD FOR DETERMINING AT LEAST ONE WEAR PARAMETER OF A CUTTING WIRE, AND ITS IMPLEMENTATION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2018 FR 1871973**

(43) Date de publication de la demande:
**03.06.2020 Bulletin 2020/23**

(73) Titulaire: **Commissariat à l'Energie Atomique et aux Energies Alternatives**
**75015 Paris (FR)**

(72) Inventeurs:
• **RIVA, Roland**
**38054 GRENOBLE CEDEX 09 (FR)**
• **COUSTIER, Fabrice**
**38054 GRENOBLE CEDEX 09 (FR)**
• **DEBOURDEAU, Mathieu**
**38054 GRENOBLE CEDEX 09 (FR)**
• **VELET, Nicolas**
**38054 GRENOBLE CEDEX 09 (FR)**

(74) Mandataire: **Cabinet Camus Lebkiri**
**25 rue de Maubeuge**
**75009 Paris (FR)**

(56) Documents cités:
EP-A1- 2 586 582 EP-A1- 2 815 834
EP-A1- 3 015 237 WO-A1-2017/036888
CN-A- 102 890 039

**Description**

**DOMAINE TECHNIQUE DE L'INVENTION**

La présente invention est relative à la mesure et au suivi de l'usure d'un fil de coupe utilisé notamment lors du sciage des tranches de silicium pour applications photovoltaïques. Elle concerne plus particulièrement un procédé de détermination d'au moins un paramètre de l'usure d'un fil de coupe à abrasif fixe à partir d'un modèle de prédiction. L'invention s'applique en particulier à un procédé de coupe et/ou à un procédé de fabrication du fil de coupe.

**ÉTAT DE LA TECHNIQUE**

Le sciage en tranches fines du silicium, pour obtenir des wafers, ou d'autres substances dures telles que le saphir, peut être réalisé à l'aide de fil à abrasifs liés, à la surface desquels sont fixés des grains émergents de dureté supérieure à celle du matériau à mettre en forme, en général constitués de diamant. La coupe résulte alors d'un mouvement longitudinal du fil, éventuellement alternatif (inversion périodique de sens), sur lequel l'objet à scier exerce une force d'appui, ou inversement. Cette opération est réalisée dans des scies où le fil abrasif est enroulé plusieurs centaines de fois autour de guides cylindriques rotatifs rainurés qui déterminent l'écartement entre les passes, pour former une nappe. Dans le cas des wafers de silicium pour applications photovoltaïques, le diamètre extérieur typique du fil diamanté est en général inférieur ou égal à 120 $\mu$m avec un écartement entre passes de 150 à 300 $\mu$m, pour obtenir des plaquettes d'environ 180 $\mu$m d'épaisseur.

Au cours de l'opération de sciage du silicium, le fil diamanté subit une usure qui se traduit principalement par une diminution de hauteur des protubérances et par l'arrachement de certains abrasifs, par exemple des grains de diamants (une perte d'épaisseur du liant est également possible). La rapidité de cette usure dépend de la nature et de la morphologie du fil, du matériau coupé (silicium multi ou monocristallin, densité de précipités, etc.) et des conditions de sciage (vitesse de défilement du fil abrasif, vitesse de pénétration - avance, taux de rafraîchissement du fil, lubrification, etc.). Un suivi de l'usure du fil pendant la coupe permet d'adapter ces conditions en fonction des difficultés rencontrées, afin de préserver son intégrité. Pour cela, le suivi doit permettre d'analyser en temps réel de grandes longueurs de fil (plusieurs kilomètres) avec une résolution longitudinale aussi réduite que possible (quelques millimètres à quelques centimètres au maximum).

Le document WO 2017/036888 A1, du même demandeur, est considéré comme représentant l'état de la technique le plus pertinent, divulgue un dispositif de coupe comprenant des moyens de détermination d'au moins un paramètre d'usure d'un fil de coupe à abrasif fixe et des moyens de mesure du diamètre apparent du fil.

Des dispositifs et méthodes d'analyse des fils en ligne ont déjà été proposés. Par exemple, le document EP 2 586 582 A1 « Wire saw control system and wire saw » de la société Applied MATerials (AMAT) décrit un système de suivi de l'usure du fil pendant la coupe, dans des scies « multi-fils », afin de réaliser un suivi visant à agir sur les conditions de sciage, en cas de nécessité. Le suivi de l'état du fil est effectué au moyen d'une caméra placée au niveau de la nappe de fils ou à proximité d'une bobine (zone non exposée aux projections de liquide et autres poussières). La caméra réalise des prises de vues du ou des fils qui sont déclenchées en fonction de leur vitesse (synchronisation). Ainsi, pour optimiser la qualité des prises de vues, il est préconisé d'enregistrer des images lorsque la vitesse du fil est proche de 0, avant et après l'inversion de sens (typiquement à +/-1 m/s au maximum), sans pour autant exclure des enregistrements cadencés. Les prises de vues sont ensuite traitées par analyse d'images afin de déterminer notamment le diamètre du fil et l'homogénéité de la répartition des diamants. Outre les difficultés de réglage des prises de vues par caméra (éclairage, mise au point), le procédé décrit dans ce document souffre d'un inconvénient inhérent à tous les procédés reposant sur du traitement d'images, à savoir le volume de données à traiter, qui grève la rapidité du procédé et mobilise d'importantes ressources informatiques.

Le document JP 2005 - 37221 A « *Inspection method of wire saw, inspection device of wire saw and cutting device* » de la société NORITAKE adressent également le suivi d'usure du fil dans les scies. Il s'appuie sur la détection de contours des fils diamantés au moyen de caméras CCD disposées perpendiculairement à l'axe de défilement du fil, avec un rétroéclairage par LED. Plusieurs caméras peuvent être installées autour du fil afin d'évaluer la distribution circonférentielle des diamants et d'appréhender une éventuelle usure dissymétrique. Là encore, le système proposé, basé sur des prises de vues, impose de réaliser un traitement d'images finalement peu compatible avec une analyse en ligne du fil.

Le document JP 2014-108472 A « *Wire tool inspection method* » dédié cette fois au suivi de production des fils diamantés décrit une méthode d'inspection de la couche de liant (résine ou métal électro-déposé) basée sur une mesure de diamètre par LASER. L'inconvénient majeur du procédé est qu'il est limité à des vitesses de défilement du fil de 10 à 40 m/min (valeurs typiques lors de la fabrication des fils diamantés). De plus, contrairement à notre invention, le traitement effectué vise à éliminer l'effet des protubérances sur les mesures et non pas assurer le suivi d'au moins un paramètre d'usure.

Il existe donc un besoin d'un procédé de détermination et de suivi d'au moins un paramètre de l'usure d'un fil de coupe ne nécessitant pas une puissance de calcul élevé. Il existe également un besoin d'un procédé de détermination et de suivi d'au moins un paramètre de l'usure qui puisse être mis en œuvre même lorsque la vitesse de défilement du fil est élevée.

## RÉSUMÉ DE L'INVENTION

L'invention offre une solution aux problèmes détaillés ci-dessus en proposant un procédé de détermination d'au moins un paramètre d'usure d'un fil de coupe à abrasif fixe à partir d'un modèle de prédiction ; le paramètre d'usure étant choisi parmi la densité linéique et/ou surfacique d'abrasif ou la hauteur des protubérances ; le modèle de prédiction permettant de déterminer, à partir d'une mesure du diamètre apparent du fil, la densité linéique et/ou surfacique d'abrasif et/ou la hauteur des protubérances. Pour cela, le procédé selon un premier aspect de l'invention comprend :

- une étape de mesure du diamètre apparent du fil de coupe ;
- une étape de détermination, à partir de ladite mesure et à l'aide du modèle de prédiction, de la densité linéique et/ou surfacique d'abrasif et/ou la hauteur des protubérances dudit fil.

Ainsi, par une simple mesure du diamètre apparent pouvant être réalisée à haute fréquence et donc pour une vitesse de défilement du fil élevée (en générale au moins égale à 30 m/s), il est possible de déterminer au moins un paramètre de l'usure du fil de coupe. En outre, cette détermination ne nécessite que des moyens de calculs limités, aucun traitement d'image n'étant nécessaire. On entend par hauteur des protubérances la hauteur de dépassement des grains abrasifs.
Le dispositif selon un premier aspect de l'invention peut également présenter une ou plusieurs des caractéristiques ci-dessous, considérées individuellement ou selon toutes les combinaisons techniquement possibles.
Dans un mode de réalisation, le procédé comprend, avant l'étape de mesure du diamètre apparent, une étape de détermination du modèle de prédiction, ladite étape comprenant :

- une sous-étape de mesure, pour différents états d'usures d'un fil, du diamètre apparent dudit fil ;
- une sous étape de détermination, pour les différents états d'usures d'un fil, de la densité linéique et/ou surfacique d'abrasif et/ou la hauteur des protubérances dudit fil ;
- une sous-étape d'établissement, à partir des résultats de la sous-étape de mesure et de la sous-étape de détermination, du modèle de prédiction permettant de déterminer, à partir d'une mesure du diamètre apparent, la densité linéique et/ou surfacique d'abrasif et/ou la hauteur des protubérances.

Ainsi, lorsqu'aucun tiers ne fournit le modèle de prédiction, ce dernier peut être déterminé.
Dans un mode de réalisation, lors de l'étape de détermination du modèle de prédiction, les mesures sont effectuées avec une vitesse de défilement du fil inférieure à 30 m/s, de préférence égale à 0,5 m/s.
Dans un mode de réalisation, la hauteur des protubérances est une hauteur normalisée, le diamètre apparent du fil est un diamètre apparent normalisé et/ou la densité linéique et/ou surfacique du fil est une densité linéique et/ou surfacique normalisée.
Dans un mode de réalisation, lors de l'étape de mesure du diamètre apparent du fil de coupe, la vitesse de défilement du fil est égale à la vitesse maximale de coupe. On entend par vitesse maximale la vitesse de défilement du fil lors de la coupe lorsque l'accélération de défilement dudit fil est nulle.
Un deuxième aspect de l'invention concerne un procédé de coupe d'un lingot à l'aide d'un fil de coupe à abrasif fixe mettant en œuvre un procédé de détermination d'au moins un paramètre de l'usure d'un fil de coupe à abrasif fixe selon un premier aspect de l'invention.
Un troisième aspect de l'invention concerne un procédé de fabrication d'un fil de coupe à abrasif fixe mettant en œuvre un procédé de détermination d'au moins un paramètre d'usure d'un fil de coupe à abrasif fixe selon un premier aspect de l'invention.
Un quatrième aspect de l'invention concerne un dispositif de coupe comprenant un moyen de mesure du diamètre apparent du fil de coupe et des moyens adaptés pour exécuter les étapes du procédé selon un premier, un deuxième ou un troisième aspect de l'invention.
Un cinquième aspect de l'invention concerne un programme d'ordinateur comprenant des instructions qui conduisent le dispositif selon un quatrième aspect de l'invention à exécuter les étapes d'un procédé selon un premier, un deuxième ou un troisième aspect de l'invention.
Un sixième aspect de l'invention concerne un support lisible par ordinateur, sur lequel est enregistré le programme d'ordinateur selon un cinquième aspect de l'invention.

## BRÈVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :

[Figure 1] montre un ordinogramme d'un procédé selon un premier aspect de l'invention.
[Figure 2] montre une représentation schématique du principe de mesure du diamètre apparent par ombrage.
[Figure 3] montre l'évolution de la densité linéique d'abrasif normalisée en fonction du diamètre apparent normalisé.
[Figure 4] montre l'évolution de la hauteur des protubérances normalisée en fonction du diamètre apparent normalisé.
[Figure 5] compare la valeur du diamètre apparent mesurée dans un procédé selon l'invention et cette même valeur mesurée ex-situ en fonction de l'avancement de la coupe.
[Figure 6] montre la valeur de la densité linéique d'abrasif (ici le diamant) en fonction de l'avancement de la coupe et pour deux coupes différentes.
[Figure 7] montre la valeur de la hauteur des protubérances en fonction de l'avancement de la coupe et pour deux coupes différentes.

Pour plus de clarté, les éléments identiques ou similaires sont repérés par des signes de référence identiques sur l'ensemble des figures.

## DESCRIPTION DÉTAILLÉE D'AU MOINS UN MODE DE RÉALISATION

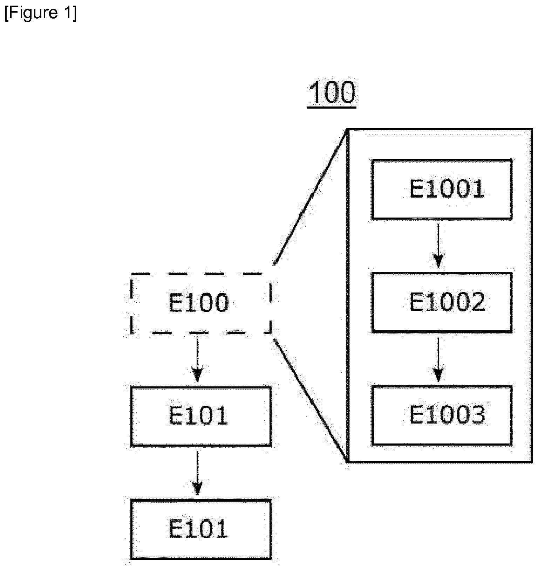

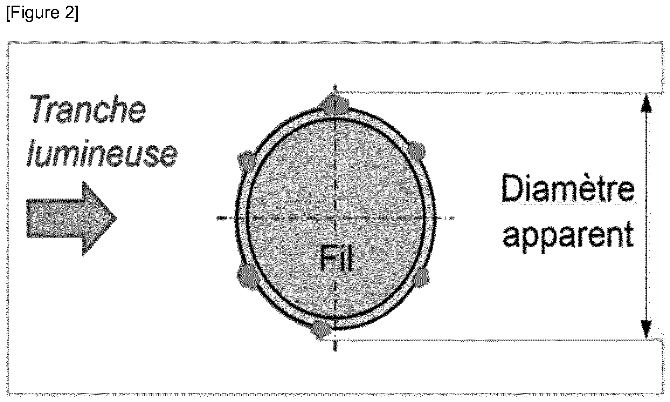

Un premier mode de réalisation d'un premier aspect de l'invention illustré à la figure 1 représente un procédé 100 de détermination d'au moins un paramètre d'usure d'un fil de coupe à abrasif fixe à partir d'un modèle de prédiction.
L'usure d'un fil est généralement caractérisée par au moins un paramètre choisi parmi la densité linéique et/ou surfacique d'abrasifs, par exemple du diamant, ou la hauteur des protubérances. Le procédé 100 de détermination selon un premier aspect de l'invention vise donc à déterminer au moins l'un de ces paramètres. Pour cela, ledit procédé 100 fait usage d'un modèle de prédiction, ledit modèle de prédiction permettant de déterminer, à partir d'une mesure du diamètre apparent du fil, la densité linéique et/ou surfacique d'abrasifs et/ou la hauteur des protubérances. Ainsi, grâce au procédé 100 selon un premier aspect de l'invention, il n'est plus nécessaire de mesurer directement les paramètres permettant de caractériser l'usure du fil, mais seulement le diamètre apparent du fil. Le diamètre apparent du fil intègre celui de son âme (généralement métallique), le plus souvent comprise entre 50 et 120 $\mu$m, l'épaisseur d'un éventuel liant la recouvrant et la hauteur d'éventuelles protubérances contenant ou correspondant aux grains d'abrasif, généralement constitués de diamant, non nécessairement réparties symétriquement par rapport à l'axe.
Le modèle de prédiction nécessaire à la mise en œuvre du procédé 100 selon un premier aspect de l'invention peut être déterminé par un tiers, par exemple le fournisseur ou le fabricant du fil, et fourni à l'utilisateur. Cependant, il peut être nécessaire de le déterminer lorsque le fournisseur n'est pas en mesure d'effectuer ladite détermination. Cette détermination sera détaillée dans la suite.
Une fois que le modèle de prédiction a été établi ou que ce dernier a été fourni par un tiers, il est possible de déterminer le ou les paramètres de l'usure d'un fil à partir de la mesure du diamètre apparent. Pour cela, le procédé 100 selon un premier aspect de l'invention comprend une étape E101 de mesure du diamètre apparent du fil de coupe. Cette mesure peut être effectuée au moyen d'un ou plusieurs micromètres optiques.
Dans un mode de réalisation, la mesure du diamètre apparent est effectuée au moyen d'un dispositif tel que décrit dans la demande WO2017/036888A1. Dans un tel dispositif, le diamètre apparent du fil est mesuré selon une ou plusieurs directions afin d'évaluer la répartition circonférentielle des grains d'abrasif. Une telle mesure se fait au moyen d'un ou plusieurs micromètres optiques, la mesure reposant sur le principe d'ombrage illustré à la figure 2 selon lequel un faisceau lumineux plan est coupé perpendiculairement par le fil en mouvement. La taille de la zone occultée par le fil, qui correspond à son diamètre apparent, est alors mesurée par un capteur linéaire photosensible. De préférence, on choisira un capteur linéaire dont la largeur utile est comprise entre 20 et 40 $\mu$m, de préférence égale à 30 $\mu$m. Les mesures ainsi obtenues sont enregistrées avec, en général, une fréquence maximale de 16 kHz et par paquets de 400 000 points. Dans un mode de réalisation, un ou plusieurs micromètres optiques sont installés à l'intérieur d'une scie à fil, en amont ou/et en aval de la chambre de coupe, pour mesurer le diamètre apparent du fil suivant une ou plusieurs directions. Le ou les micromètres sont montés sur des supports assurant leur perpendicularité avec le fil (par exemple à +1-2° près) et sont équipés de déplacements micrométriques, afin de régler le centrage du domaine de mesure sur le fil (par exemple à +/- 0,2 mm près).
Dans un mode de réalisation, lors de l'étape E100 de mesure du diamètre apparent du fil de coupe, le fil se déplace à sa vitesse maximale de coupe. On entend par vitesse maximale la vitesse de défilement du fil lors de la coupe lorsque l'accélération de défilement dudit fil est nulle. Dans un mode de réalisation, cette vitesse de défilement est comprise entre 20 et 40 m/s, de préférence égale à 30 m/s.

Une fois que le diamètre apparent a été déterminé, il est possible d'en déduire au moins un paramètre caractéristique de l'usure du fil. Pour cela, le procédé 100 comprend une étape E102 de détermination, à partir de ladite mesure et à l'aide du modèle de prédiction, de la densité linéique et/ou surfacique d'abrasif et/ou la hauteur des protubérances dudit fil. Autrement dit, le diamètre apparent est fourni en entrée du modèle de prédiction et ce dernier fournit en sortie au moins un paramètre de l'usure du fil de coupe.

Comme précisé précédemment, il peut être nécessaire de déterminer le modèle de prédiction lorsque ce dernier n'est pas fourni par un tiers. Pour cela, dans un mode de réalisation, le procédé 100 comprend une étape E100 de détermination du modèle de prédiction.

Cette étape E100 de détermination du modèle de prédiction comprend une sous-étape E1001 de mesures, pour différents états d'usures d'un fil, du diamètre apparent dudit fil. Dans un mode de réalisation, la sous-étape de mesure est effectuée à faible vitesse de défilement (relativement à la vitesse de défilement lors de l'étape de mesure du diamètre apparent du fil). On entend par faible vitesse de défilement une vitesse de défilement inférieure ou égale à 0,5 m/s. Cette sous-étape E1001 de mesure peut être effectuée ex-situ, par exemple sur un bobineur, ou directement sur la scie, par exemple en faisant défiler de courts tronçons du fil. Lorsque cette sous-étape E1001 est réalisée sur la scie, la mesure du diamètre apparent peut être effectuée en utilisant les moyens déjà détaillés précédemment dans le cadre de l'étape E101 de mesure du diamètre apparent du fil de coupe. De préférence, cette sous-étape E1001 de mesure est réalisée à vitesse stable, c'est-à-dire lorsque l'accélération de défilement du fil est nulle. En effet, il a été observé que les mesures étaient perturbées lors des phases d'accélération et de décélération du fil, probablement du fait de variations de sa tension.

L'étape E100 de détermination du modèle de prédiction comprend ensuite une sous-étape E1002 de détermination, pour les différents états d'usures d'un fil, de la densité linéique et/ou surfacique d'abrasif et/ou la hauteur des protubérances dudit fil. En effet, les conditions de mesure décrite précédemment permettent notamment l'utilisation du procédé décrit dans la demande WO2017/03688A1 et donc de déterminer, pour chaque état d'usure, le diamètre apparent, l'épaisseur de liant (connaissant le diamètre de l'âme), la densité linéique et/ou surfacique d'abrasif ainsi que la hauteur des protubérances. En effet, la demande WO2017/03688A1 décrit une méthode de traitement statistique reposant sur l'établissement et l'exploitation d'un histogramme normalisé de la densité de probabilité de mesurer un diamètre apparent donné. Cette méthode permet de déterminer la densité linéique et/ou surfacique d'abrasif (par exemple des diamants) et la hauteur des protubérances, qui sont des indicateurs de l'usure du fil. L'inconvénient majeur de cette méthode est cependant que le traitement statistique utilisé ne peut s'appliquer que pour des vitesses de défilement du fil inférieures ou égales à 0,5 m/s (30 m/min). Aussi, lors de l'étape E100 de détermination du modèle de prédiction, la vitesse de défilement du fil est plus faible que lors de l'étape E101 de mesure du diamètre apparent du fil.

L'étape E100 de détermination du modèle de prédiction comprend ensuite une sous-étape E1003 d'établissement, à partir des résultats de la sous-étape E1001 de mesure et de la sous-étape E1002 de détermination, du modèle de prédiction permettant de déterminer, à partir d'une mesure du diamètre apparent, la densité linéique et/ou surfacique d'abrasifs et/ou la hauteur des protubérances. Autrement dit, le modèle de prédiction ainsi obtenu permet de déterminer, à partir d'une mesure du diamètre apparent fourni en entrée, la valeur de la hauteur des protubérances et/ou la valeur de la densité linéique et/ou surfacique d'abrasifs. Le modèle peut prendre la forme d'une courbe paramétrique ou bien encore d'un tableau de correspondance (lookup table en anglais).

Dans un exemple de réalisation, l'étape E100 de détermination du modèle de prédiction est effectuée ex-situ à partir d'un fil à l'état neuf. Dans un mode de réalisation alternatif, l'étape E100 de détermination du modèle de prédiction est effectuée sur la scie à partir d'un fil à l'état neuf. Dans un mode de réalisation, durant la mesure, au moins 100 000 enregistrements, de préférence 400 000 enregistrements sont effectués à une fréquence de 16 kHz et pour une vitesse de fil de 0,5 m/s. De préférence, la durée d'enregistrement est de 25 secondes, soit une longueur de fil d'au maximum 12,5 m. Ensuite, à l'aide du procédé décrit dans la demande WO2017/03688A1, on déduit l'épaisseur de liant (connaissant le diamètre de l'âme), la densité linéique et/ou surfacique d'abrasifs ainsi que la hauteur des protubérances.

Dans un mode de réalisation, la hauteur des protubérances est une hauteur normalisée, le diamètre apparent du fil est un diamètre apparent normalisé et/ou la densité linéique et/ou surfacique d'abrasifs du fil est une densité linéique et/ou surfacique normalisée.

Plus particulièrement, le diamètre apparent normalisé est déterminé à l'aide de la formule suivante :

$$d_{norm}^{mesure} = \frac{D^{mesure} - D^{totalement\ usé}}{D^{neuf} - D^{totalement\ usé}}$$

où $d_{norm}^{mesure}$ est le diamètre apparent normalisé mesuré, $D^{mesure}$ est le diamètre apparent mesuré, $D^{neuf}$ est le diamètre apparent du fil à l'état neuf et $D^{usée}$ est le diamètre apparent du fil totalement usé. On notera donc que le diamètre apparent normalisé du fil à l'état neuf est égal à 1 tandis que le diamètre apparent normalisé du fil totalement usé est égal à zéro, c'est-à-dire $0 \leq d_{norm}^{mesure} \leq 1$. La normalisation du diamètre apparent permet de comparer et d'intégrer dans un même modèle de prédiction des mesures effectuées sur des diamètres de fil à l'état neuf différents.

De la même manière, la densité linéique d'abrasifs normalisée est déterminée à l'aide de la formule suivante :

$$\rho_{norm}^{mesure} = \frac{\mathrm{P}^{mesure}}{\mathrm{P}^{neuf}}$$

où $\rho_{norm}^{mesure}$ est la densité linéique d'abrasifs normalisée mesurée, $\mathrm{P}^{mesure}$ est la densité linéique d'abrasif mesurée et $\mathrm{P}^{neuf}$ est la densité linéique d'abrasifs du fil à l'état neuf. On notera que la densité linéique d'abrasif normalisée du fil à l'état parfaitement neuf (c'est-à-dire, de préférence avant bobinage) est égale à 1 tandis qu'une usure extrême (jamais atteinte en pratique) correspond à une densité linéique d'abrasif normalisée égale à 0, c'est-à-dire $0 \leq \rho_{norm}^{mesure} \leq 1$. La normalisation de la densité linéique d'abrasif permet de comparer et d'intégrer au modèle de prédiction des mesures effectuées sur des fils neufs présentant des densités linéiques d'abrasif différente. La même méthode de normalisation est utilisée pour la densité surfacique d'abrasif.

De la même manière, la hauteur des protubérances normalisée est déterminée à l'aide de la formule suivante :

$$h_{norm}^{mesure} = \frac{H^{mesure}}{H^{neuf}}$$

où $h_{norm}^{mesure}$ est la hauteur des protubérances normalisée mesurée, $H^{mesure}$ est la hauteur des protubérances mesurée et $H^{neuf}$ est la hauteur des protubérances du fil à l'état neuf. On notera que la hauteur des protubérances normalisée du fil à l'état neuf est égale à 1 tandis qu'un pour une usure extrême (jamais atteinte en pratique) la hauteur des protubérances normalisée est égale à 0, c'est-à-dire que $0 \leq h_{norm}^{mesure} \leq 1$. La normalisation de la hauteur des protubérances permet de comparer et d'intégrer au modèle de prédiction des mesures effectuées sur des fils neufs présentant des hauteurs de protubérance différentes.

La valeur des paramètres des fils à l'état neuf ou usagé permettant d'effectuer la normalisation est également déterminée lors de l'étape E100 de détermination d'un modèle de prédiction ou bien alors fournie au préalable, par exemple par le fabricant ou le fournisseur.

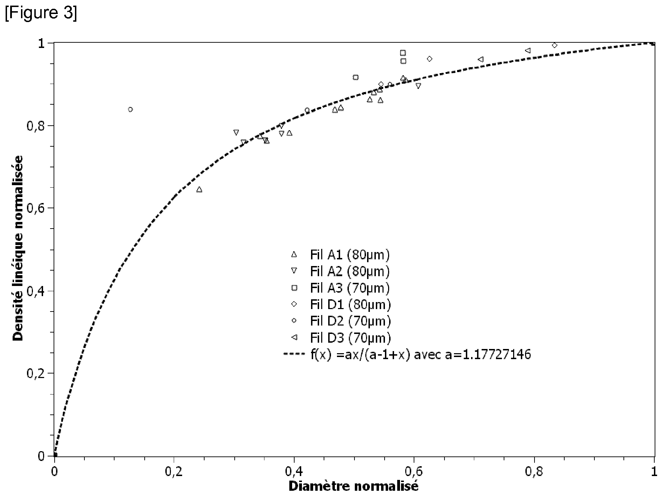

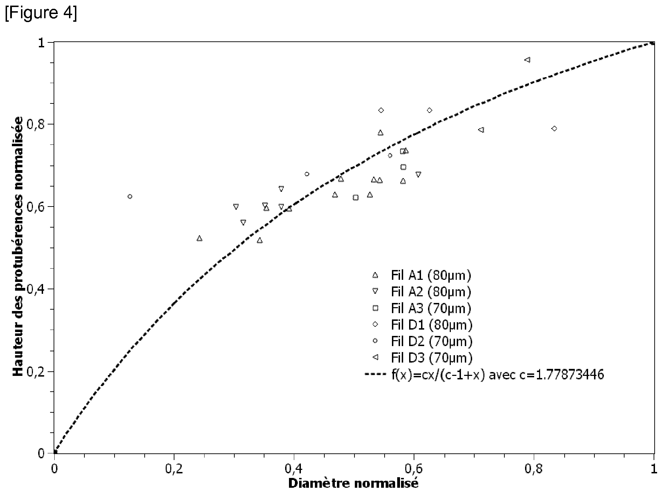

L'évolution de densité linéique d'abrasifs normalisée et de la hauteur des protubérances normalisée en fonction du diamètre apparent normalisé est illustrée aux figures 3 et 4. Plus particulièrement, la figure 3 représente l'évolution de la densité linéique d'abrasifs normalisée en fonction du diamètre apparent normalisé pour des fils de différents diamètres à l'état neuf. On observe que, quel que soit le diamètre à l'état neuf, l'évolution de la densité linéique d'abrasifs normalisée en fonction du diamètre apparent normalisé est sensiblement la même. De même, la figure 4 représente l'évolution de la hauteur des protubérances normalisée en fonction du diamètre apparent normalisé. Là encore, quel que soit le diamètre à l'état neuf, l'évolution de la hauteur des protubérances normalisée en fonction du diamètre apparent normalisé est sensiblement la même. Autrement dit, en utilisant des grandeurs normalisées, il est possible d'utiliser un modèle de prédiction déterminé avec un diamètre de fil à l'état neuf donné pour prédire l'usure d'un fil dont le diamètre à l'état neuf est différent.

Le procédé 100 de mesure d'au moins un paramètre de l'usure d'un fil selon un premier aspect de l'invention peut ensuite être mis à profit dans le cadre de la coupe de lingots notamment en briques. Pour cela, un deuxième aspect de l'invention concerne un procédé de coupe d'un lingot à l'aide d'un fil de coupe à abrasif fixe mettant en œuvre un procédé 100 de mesure d'au moins un paramètre de l'usure d'un fil de coupe à abrasif fixe à partir d'un modèle de prédiction selon un premier aspect de l'invention. Ainsi, il est possible d'analyser en situation de coupe et en temps réel l'usure du fil et ceci, sur la totalité de la longueur mise en œuvre, qui est généralement supérieure à 1 km. Dans un mode de réalisation, le procédé de coupe d'un lingot selon un deuxième aspect de l'invention comprend, à intervalle régulier, une étape de mise en œuvre du procédé 100 selon un premier aspect de l'invention et, éventuellement une étape de correction des paramètres de coupe en fonction de la valeur du ou des paramètres d'usure du fil. Autrement dit, les informations tirées des mesures peuvent aider à la conduite du procédé de coupe, par exemple en alertant d'utilisateur d'une usure anormale du fil. Ce dernier pourra alors intervenir en modifiant les paramètres de sciage, afin de mener la coupe à terme.

Dans un mode de réalisation, le procédé de coupe concerne la coupe en plaquettes fines de matériaux durs tels que silicium, germanium et autres semiconducteurs, saphir, rubis, etc. De tels matériaux sont notamment utilisés dans les domaines du photovoltaïque, de la microélectronique, de l'optique et de l'optoélectronique. Pour mémoire, le diamètre des fils diamantés utilisés dans ce type procédé de coupe est généralement de quelques dizaines de $\mu$m, le plus souvent de 50 à 120 $\mu$m.

Dans un mode de réalisation, le procédé de coupe peut concerner l'éboutage ou de mise en forme de lingots (squaring en anglais). Dans de tels procédés, un seul fil est en général utilisé, éventuellement bouclé sur lui-même, de diamètre supérieur à ceux utilisés pour la coupe en plaquette, typiquement plusieurs centaines de $\mu$m, en général de l'ordre de 600 $\mu$m.

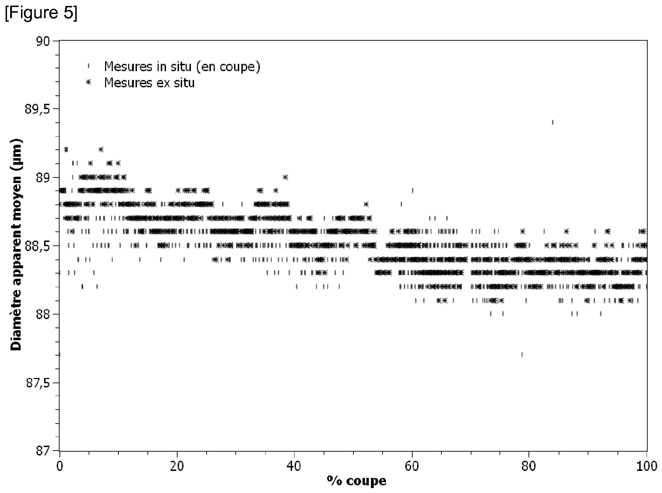

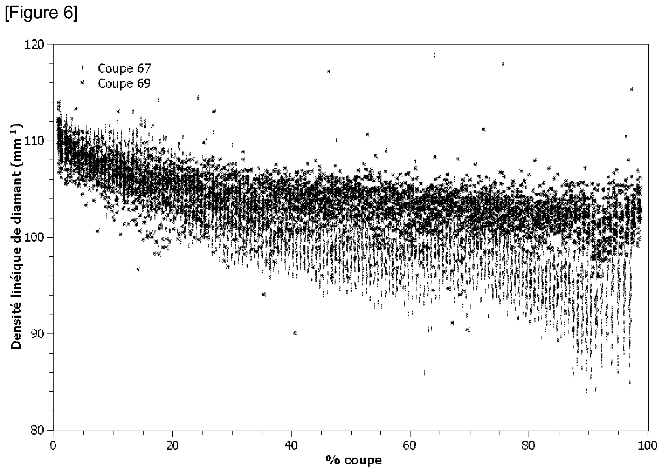

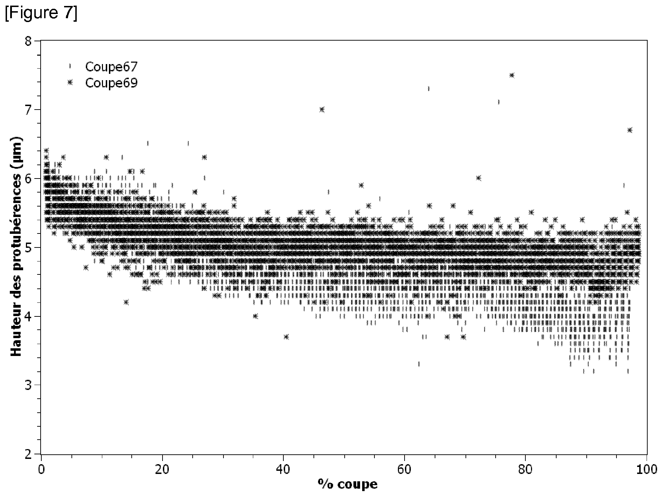

Un exemple de réalisation est illustré à la figure 5, à la figure 6 et à la figure 7. La figure 5 représente les mesures de diamètre apparent réalisées durant la coupe et les compare à une mesure de la même caractéristique ex-situ (par exemple sur système de bobinage). Cette figure montre ainsi que, bien que mesurée à la vitesse maximale, la valeur du diamètre apparent est sensiblement identique à ladite valeur mesurée à faible vitesse (i.e. ex situ, par exemple à 0,5 m/s). De plus, à l'aide du modèle de prédiction, il est possible d'associer à chaque valeur de diamètre apparent mesurée, une valeur de la densité linéique d'abrasifs (figure 6 - pour deux coupes différentes) et/ou une valeur de la hauteur des protubérances (figure 7 - pour deux coupes différentes). À titre de comparaison, voici les valeurs mesurées ex-situ des mêmes paramètres dans le tableau 1.

[Tableau 1]

|  | Fil à l'état neuf | Fil usagé en fin de coupe 69 | Fil usagé en fin de coupe 67 |
|---|---|---|---|
| Diamètre apparent | 89,6 | 88,5 | 88,0 |
| Densité linéique de diamants | 115 | 100 | 88 |
| Hauteur des protubérances | 6,6 | 4,4 | 3,4 |

Tableau 1

Le tableau 1 nous permet de constater que les valeurs estimées en fin de coupe à l'aide d'un procédé 100 selon un premier ou un deuxième aspect de l'invention (figures 6 et 7) sont proches des valeurs mesurées ex-situ.

Le procédé 100 selon un premier aspect de l'invention peut également avoir un intérêt dans le suivi de la fabrication de fil de coupe à abrasifs fixes. Pour cela, un troisième aspect de l'invention concerne un procédé de fabrication d'un fil de coupe à abrasif fixe mettant en œuvre un procédé de mesure d'au moins un paramètre caractérisant la densité linéique et/ou surfacique de l'abrasif et/ou la hauteur des protubérances d'un fil de coupe à abrasif fixe à partir d'un modèle de prédiction selon un premier aspect de l'invention. Par exemple, le procédé de fabrication peut comprendre, à intervalle régulier, une étape de mise en œuvre du procédé 100 selon un premier aspect de l'invention et, éventuellement une étape de correction des paramètres de fabrication en fonction de la valeur du ou des paramètres caractérisant la densité linéique et/ou surfacique de l'abrasif et/ou la hauteur des protubérances du fil. Pour rappel, le procédé de fabrication d'un fil de coupe consiste à déposer un liant à base de nickel (éventuellement, en plusieurs passes) ainsi que des grains d'abrasifs micrométriques (par exemple des diamants micrométriques), sur un fil d'acier. Aussi, la mise en œuvre d'un procédé 100 selon un premier aspect de l'invention dans le procédé de fabrication selon un troisième aspect de l'invention permet d'évaluer en temps réel et en continu la qualité du revêtement (continuité, régularité), de mesurer son épaisseur, et de déterminer la quantité (densité linéique et/ou surfacique) d'abrasifs déposés ainsi que leur répartition longitudinale et circonférentielle. Pour cela, dans un mode de réalisation, plusieurs systèmes de mesures sont disposés en différents points de la ligne de production (afin d'évaluer l'efficacité du procédé ainsi que l'uniformité longitudinale du fil), avec plusieurs orientations par rapport à l'axe du fil (pour s'assurer de l'homogénéité radiale de l'abrasif).

Un quatrième aspect de l'invention concerne un dispositif de coupe comprenant des moyens de mettre en œuvre le procédé selon un premier ou un deuxième aspect de l'invention. Dans un mode de réalisation, le dispositif comporte un moyen de mesure du diamètre apparent du fil de coupe. Dans un mode de réalisation, la mesure du diamètre apparent du fil est effectuée à l'aide d'au moins un micromètre, de préférence deux micromètres, monoaxes, par exemple un micromètre LS-9006 de la marque Keyence utilisant un éclairage à LED vertes, couplé à des capteurs optiques, par exemple des capteurs CMOS. Dans un mode de réalisation, le moyen de mesure est disposé en amont de la chambre de coupe. Dans un mode de réalisation alternatif ou complémentaire, le moyen de mesure est disposé en aval de la chambre de coupe. Dans un mode de réalisation, le dispositif comporte également au moins un moyen de réglage de la position radiale du moyen de mesure, par exemple un moyen de déplacement micrométrique permettant de régler le centrage du fil dans la zone de mesure du moyen de mesure. De manière, générale, le réglage du moyen de mesure est effectué, fil à l'arrêt en appliquant une tension sur le fil de coupe identique à celle appliquée lors du sciage, par exemple une tension de 15 N. De préférence, lors de ce centrage, la position du fil dans la zone de mesure du moyen de mesure est visualisée, par exemple à l'aide d'un logiciel tel que le logiciel LS-Navigator de la marque Keyence, généralement fourni avec le moyen de mesure.

Dans un mode de réalisation, le dispositif comprend un équipement de bobinage, par exemple un système de bobinage de type MOBAC, afin notamment de mettre en œuvre une étape de détermination du modèle de prédiction. Il est cependant important de noter que l'étape de détermination du modèle de prédiction peut être effectuée sur le dispositif de coupe. Dans un mode de réalisation, ledit système de bobinage est configuré pour bobiner le fil à une vitesse de 0,5 m/s.

Naturellement, l'invention n'est pas limitée aux modes de réalisation décrits en référence aux figures et des variantes pourraient être envisagées sans sortir du cadre de l'invention telle que définie par les revendications.

## Revendications

1. Procédé (100) de détermination d'au moins un paramètre d'usure d'un fil de coupe à abrasif fixe à partir d'un modèle de prédiction ; le paramètre d'usure étant choisi parmi la densité linéique et/ou surfacique d'abrasif ou la hauteur des protubérances ; le modèle de prédiction permettant de déterminer, à partir d'une mesure du diamètre apparent du fil, la densité linéique et/ou surfacique d'abrasif et/ou la hauteur des protubérances ; le procédé comprenant :

   - une étape (E101) de mesure du diamètre apparent du fil de coupe ;
   - une étape (E102) de détermination, à partir de ladite mesure et à l'aide du modèle de prédiction, de la densité linéique et/ou surfacique d'abrasif et/ou la hauteur des protubérances dudit fil.

2. Procédé (100) selon la revendication précédente **caractérisé en ce qu'**il comprend, avant l'étape de mesure du diamètre apparent, une étape (E100) de détermination du modèle de prédiction, ladite étape comprenant :

   - une sous-étape (E1001) de mesure, pour différents états d'usures d'un fil, du diamètre apparent dudit fil ;
   - une sous-étape (E1002) de détermination, pour les différents états d'usures d'un fil, de la densité linéique et/ou surfacique d'abrasif et/ou la hauteur des protubérances dudit fil ;
   - une sous-étape (E1003) d'établissement, à partir des résultats de la sous-étape de mesure et de la sous-étape de détermination, du modèle de prédiction permettant de déterminer, à partir d'une mesure du diamètre apparent, la densité linéique et/ou surfacique d'abrasif et/ou la hauteur des protubérances.

3. Procédé (100) selon la revendication précédente **caractérisé en ce que**, lors de l'étape (E100) de détermination du modèle de prédiction, les mesures sont effectuées avec une vitesse de défilement du fil inférieure à 30 m/s, de préférence égale à 0,5 m/s.

4. Procédé (100) selon l'une des revendications précédentes **caractérisé en ce que** la hauteur des protubérances est une hauteur normalisée, le diamètre apparent du fil est un diamètre apparent normalisé et/ou la densité linéique et/ou surfacique du fil est une densité linéique et/ou surfacique normalisée.

5. Procédé (100) selon l'une des revendications précédentes **caractérisé en ce que** lors de l'étape (E101) de mesure du diamètre apparent du fil de coupe, la vitesse de défilement du fil est égale à la vitesse maximale de coupe.

6. Procédé de coupe d'un lingot à l'aide d'un fil de coupe à abrasif fixe mettant en œuvre un procédé (100) de détermination d'au moins un paramètre de l'usure d'un fil de coupe à abrasif fixe selon l'une des revendications précédentes.

7. Procédé de fabrication d'un fil de coupe à abrasif fixe mettant en œuvre un procédé (100) de détermination d'au moins un paramètre caractérisant la densité linéique et/ou surfacique d'abrasif et/ou la hauteur des protubérances d'un fil de coupe à abrasif fixe selon l'une des revendications 1 à 5.

8. Dispositif de coupe comprenant un moyen de mesure du diamètre apparent du fil de coupe et des moyens adaptés pour exécuter les étapes du procédé (100) selon l'une des revendications précédentes.

9. Programme d'ordinateur comprenant des instructions qui conduisent le dispositif selon la revendication précédente à exécuter les étapes d'un procédé (100) selon l'une des revendications 1 à 7.

10. Support lisible par ordinateur, sur lequel est enregistré le programme d'ordinateur selon la revendication 9.

**Patentansprüche**

1. Verfahren (100) zum Bestimmen wenigstens eines Verschleißparameters eines Schnittfadens mit festem Schleifmittel ausgehend von einem Vorhersagemodell; wobei der Verschleißparameter aus der linearen Dichte und/oder der Oberflächendichte des Schleifmittels oder der Höhe der Protuberanzen ausgewählt wird; wobei das Vorhersagemodell ausgehend von einer Messung des sichtbaren Durchmessers des Fadens das Bestimmen der linearen und/oder der Oberflächendichte des Schleifmittels und/oder der Höhe der Protuberanzen zulässt, wobei das Verfahren umfasst:

   - einen Messschritt (E101) des sichtbaren Durchmessers des Schnittfadens;
   - einen Bestimmungsschritt (E102) der linearen und/oder Oberflächendichte des Schleifmittels und/oder der Höhe der Protuberanzen des genannten Fadens ausgehend von der genannten Messung und mithilfe des Vorhersagemodells.

2. Verfahren (100) gemäß dem voranstehenden Anspruch, **dadurch gekennzeichnet, dass** es vor dem Messschritt des sichtbaren Durchmessers einen Bestimmungsschritt (E100) des Vorhersagemodells umfasst, wobei der genannte Schritt umfasst:

   - einen Teil-Messschritt (E1001) des sichtbaren Durchmessers des genannten Fadens für unterschiedliche Verschleißzustände eines Fadens;
   - einen Teil-Bestimmungsschritt (E1002) der linearen und/oder Oberflächendichte des Schleifmittels und/oder der Höhe der Protuberanzen des genannten Fadens für die unterschiedlichen Verschleißzustände eines Fadens;
   - einen Teil-Erstellungsschritt (E1003) des Vorhersagemodells ausgehend von den Ergebnissen des Teil-Messschritts und des Teil-Bestimmungsschritts, der ausgehend von einer Messung des sichtbaren Durchmessers das Bestimmen der linearen und/oder der Oberflächendichte und/oder der Höhe der Protuberanzen zulässt.

3. Verfahren (100) gemäß dem voranstehenden Anspruch, **dadurch gekennzeichnet, dass** die Messungen beim Bestimmungsschritt (E100) des Vorhersagemodells mit einer Ablaufgeschwindigkeit des Fadens von weniger als 30 m/Sek., bevorzugt gleich 0,5 m/Sek. durchgeführt werden.

4. Verfahren (100) gemäß einem der voranstehenden Ansprüche, **dadurch gekennzeichnet, dass** die Höhe der Protuberanzen eine genormte Höhe ist, der sichtbare Durchmesser des Fadens ein genormter sichtbarer Durchmesser ist und/oder die lineare und/oder die Oberflächendichte des Fadens eine genormte lineare und/oder Oberflächendichte ist.

5. Verfahren (100) gemäß einem der voranstehenden Ansprüche, **dadurch gekennzeichnet, dass** die Ablaufgeschwindigkeit des Fadens beim Messschritt (E101) des sichtbaren Durchmessers des Schnittfadens gleich der maximalen Schnittgeschwindigkeit ist.

6. Schnittverfahren eines Barrens mithilfe eines Schnittfadens mit festem Schleifmittel, das ein Verfahren (100) zum Bestimmen wenigstens eines Parameters des Verschleißes eines Schnittfadens mit festem Schleifmittel gemäß einem der voranstehenden Ansprüche umsetzt.

7. Herstellungsverfahren eines Schnittfadens mit festem Schleifmittel, das ein Verfahren (100) zum Bestimmen wenigstens eines Parameters umsetzt, der die lineare und/oder Oberflächendichte des Schleifmittels und/oder die Höhe der Protuberanzen eines Schnittfadens mit festem Schleifmittel gemäß einem der Ansprüche 1 bis 5 kennzeichnet.

8. Schnittverfahren, umfassend ein Messmittel des sichtbaren Durchmessers des Schnittfadens und der Mittel, die zum Ausführen der Schritte des Verfahrens (100) gemäß einem der voranstehenden Ansprüche geeignet sind.

9. Computerprogramm, umfassend die Anweisungen, die die Vorrichtung gemäß dem voranstehenden Anspruch dazu veranlassen, die Schritte eines Verfahrens (100) gemäß einem der Ansprüche 1 bis 7 auszuführen.

**10.** Per Computer lesbarer Träger, auf dem das Computerprogramm gemäß Anspruch 9 gespeichert ist.

## Claims

**1.** A method (100) for determining at least one wear parameter of a fixed abrasive cutting wire from a prediction model; the wear parameter being selected from the abrasive linear and/or surface density or the height of the projections; the prediction model enabling, from a measurement of the apparent diameter of the wire, the abrasive linear and/or surface density and/or the height of the projections to be determined; the method comprising:

- a step (E101) of measuring the apparent diameter of the cutting wire;
- a step (E102) of determining, from said measurement and using the prediction model, the abrasive linear and/or surface density and/or the height of the projections of said wire.

**2.** The method (100) according to the previous claim, **characterised in that** it comprises, before the step of measuring the apparent diameter, a step (E100) of determining the prediction model, said step comprising:

- a sub-step (E1001) of measuring, for different wear states of a wire, the apparent diameter of said wire;
- a sub-step (E1002) of determining, for the different wear conditions of a wire, the abrasive linear and/or surface density and/or the height of the projections of said wire;
- a sub-step (E1003) of setting up, from the results of the measurement sub-step and the determination sub-step, the prediction model enabling, from a measurement of the apparent diameter, the abrasive linear and/or surface density and/or the height of the projections to be determined.

**3.** The method (100) according to the previous claim, **characterised in that**, during the step (E100) of determining the prediction model, measurements are performed with an unwinding speed of the wire lower than 30m/s, preferentially equal to 0.5m/s.

**4.** The method (100) according to one of the previous claims, **characterised in that**, the height of the projections is a normalised height, the apparent diameter of the wire is a normalised apparent diameter and/or the linear and/or surface density of the wire is a normalised linear and/or surface density.

**5.** The method (100) according to one of the previous claims, **characterised in that** during the step (E101) of measuring the apparent diameter of the cutting wire, the unwinding speed of the wire is equal to the maximum cutting speed.

**6.** A method for cutting an ingot using a fixed abrasive cutting wire implementing a method (100) for determining at least one wear parameter of a fixed abrasive cutting wire according to one of the previous claims.

**7.** A method for manufacturing a fixed abrasive cutting wire implementing a method (100) for determining at least one parameter characterising the abrasive linear and/or surface density and/or the height of the projections of a fixed abrasive cutting wire according to one of claims 1 to 5.

**8.** A cutting device comprising a means for measuring the apparent diameter of the cutting wire and means adapted to carry out the steps of the method (100) according to one of the previous claims.

**9.** A computer program comprising instructions which cause the device according to the previous claim to carry out the steps of a method (100) according to one of claims 1 to 7.

**10.** A computer readable medium, on which the computer program according to claim 9 is recorded.

[Figure 1]

[Figure 2]

Tranche lumineuse

Fil

Diamètre apparent

[Figure 3]

[Figure 4]

[Figure 5]

[Figure 6]

[Figure 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017036888 A1
- EP 2586582 A1
- JP 2005037221 A
- JP 2014108472 A
- WO 201703688 A1